# EUROPEAN PATENT SPECIFICATION

(11) **EP 1 311 993 B1**
(45) Date of publication and mention of the grant of the patent: **30.05.2007**
(21) Application number: 01960912.2
(22) Date of filing: 22.08.2001
(51) Int. Cl.: G06F 17/50

(54) **A SYSTEM AND METHOD FOR INTELLIGENT MODELLING OF PUBLIC SPACES**
INTELLIGENTES MODELLSYSTEM UND -VERFAHREN FÜR ÖFFENTLICHE RÄUME
SYSTEME ET PROCEDE DE MODELISATION INTELLIGENTE D'ESPACES PUBLICS

(30) Priority: 23.08.2000 GB 0020850
(43) Date of publication of application: 21.05.2003
(73) Proprietor: UNIVERSITY COLLEGE LONDON, London WC1E 7HN (GB)
(72) Inventor: TURNER, Patrick, Alasdair, Fionn, London SE4 1PL (GB); PENN, Alan, Richard, London N6 5TQ (GB)
(74) Representative: Jackson, Richard Eric
(86) International application number: PCT/GB2001/003763
(87) International publication number: WO 2002/017147

(56) References cited:
- EP-A- 0 869 449
- WO-A-96/23280
- US-A- 5 832 467
- A TURNER AND A. PENN: "Making isovists syntactic: isovist integration analysis" 2ND INTERNATIONAL SYMPOSIUM ON SPACE SYNTAX, April 1999 (1999-04), pages 1-9, XP002189500 Brazil
- PATENT ABSTRACTS OF JAPAN vol. 1999, no. 02, 26 February 1999 (1999-02-26) & JP 10 307864 A (HITACHI LTD), 17 November 1998 (1998-11-17)
- HILLIER B ET AL: "VIRTUOUS CIRCLES, BUILDING SCIENCES AND THE SCIENCE OF BUILDINGS: USING COMPUTERS TO INTEGRATE PRODUCT AND PROCESS IN THE BUILT ENVIRONMENT" DESIGN STUDIES, DESIGN RESEARCH SOCIETY, XX, vol. 15, no. 3, 1 July 1994 (1994-07-01), pages 332-365, XP000568631 ISSN: 0142-694X

## Description

The present invention relates to a system and method for open spaces and the interaction of people or "agents" within those spaces. More particularly, the invention provides a form of agent simulation in which relatively simple software agents are given apparently sophisticated capabilities by embedding information in their environment. The present invention is particularly useful when assessing the viability of a building or other open spaced design or layout prior to the implementation of the design. Hence, the present invention provides a system and method for developing agents simulations as predictive modelling of human behaviour within complex built or virtual environments.

Current agent based approaches rely either on sophisticated cognitive capacity being given to the software agents - for instance cognitive maps of the environment, beliefs, desires and intentions for the agents (e.g. Fischer et al, 1998), or sophisticated perceptual and interpretative ability using machine vision techniques to extract and interpret structure from the agents local view of the environment (e.g. Bachelder & Waxman, 1994). The problem with both of these approaches is that they require highly complex agents with all the processing and memory costs entailed with that. This means that relatively few agents can be modelled at once in real time, and lifelike simulations that involve mass interactions between agents, such as queuing or congestion cannot be developed. In order to simulate these kinds of mass behaviour the current prior art approach is to use large numbers of very simple agents, often with only local information on what is in their immediate neighbourhood - for example, flocking behaviour (Reynolds, 1987) or cellular automata for modelling traffic congestion (e.g. TRANSIMS; see Beckman). For a review of this kind of bottom up simulation methodology see Resnick, (1989). At a more pragmatic level there have been a number of attempts at microsimulation in the traffic modelling and fire evacuation fields. These models tend to build relatively simple agents whose 'global' decisions such as origin and destination are given, along with full knowledge of possible routes, and where only local interactions are simulated autonomously (see for example Galea & Galparsoro, 1994; Kerridge & McNair, 1999). The problem with both the bottom-up and pragmatic approaches is that they cannot model the higher level cognitive capacity involved in human behaviour and interaction.

The two main simulation toolkits in current use are Santa Fe's Swarm (Minar et al., 1996), and MIT's StarLogo (Resnick, 1994), and these are routinely used for different kinds of simulation. There are also a wide range of other simulation modelling tools developed in various areas of social and organisational simulation (eg. SDML (Moss & Edmunds), MIMOSE, Quicksilver and Agentsheets. The classic implementations in the literature would include TRANSIMS (Beckman, 1997) and Boids (Reynolds, 1987), and on the more sociological side, Epstein and Axtell's (1996) Sugarscape.

Many of the known prior art simulation concepts arise from the field of modelling (Cf. e.g. EP-0869449 A), and can be characterised as working within the 'transport engineering' paradigm. Put simply, they see movement as coming from origins and going to destinations with routing being based on some kind of cost minimisation function. When this is transposed into agent simulations the problem is seen as how does one generate the different origin-destination (O-D) pairs for the different agents, and then how does one allow agents to make routing decisions. The problem with this O-D paradigm is that it has great difficulty in dealing with 'browsing' behaviours, and resulting movement patterns are pretty well deterministic and hard coded into the model. This may be fine for fire evacuation simulations (Galea), or simulation of movement through subway systems (Kerridge), but when it comes to general pedestrian behaviour and movement patterns in urban space, concourses and retail areas, origins and destinations seem to arise as a byproduct of movement itself - or at least there is a strong coupling and feedback between the two.

This is where the approach of the present inventors differs from the others. The present inventors have focused on developing methods for analysing the configuration of spatial networks as an independent variable in trying to understand human spatial behaviour (both movement and static patterns of space use). This work is based on representing spatial patterns as graphs so that measures of relational properties of the graphs can be attributed to different plan geometries. The main empirical findings of this research are that pedestrian movement patterns correlate to a substantial degree with measures of the configuration of space alone (R² >0.75 [R² is a correlation coefficient using simple linear regression - the quoted value is for movement as a function of a space syntax measure across a system]) without invoking attractors or generators of movement. This is helpful because it allows one to look at real 'browsing' behaviours (a lot of direct observations are needed) and investigate how far spatial layout is implicated in those. It is also useful because it allows one to look not just at movement behaviour but also at 'stopping' behaviour - and anything else that shows spatial patterns for that matter - congestion, crime, interaction etc. The present inventors believe that stopping is very important so far as shopping is concerned - people need to stop to buy so modelling movement alone is not enough. Finally, the present inventors research has allowed them to develop ways of measuring the degree of intelligibility or 'maze-likeness' of building or urban plans which make some psychological sense. The measures are based on the correlation between local and global measures of the spatial network. In an intelligible spatial layout local information gives a good prediction of global location, in a maze there is no correlation between the two. This finding, together with the empirical observation that certain aspects of pedestrian movement behaviour seem to depend on the intelligibility of the area, has led to the hypothesis that people's cognitive maps are likely not to be maps in the obvious sense, but to be something more like a correlation detector that learns what goes with what as one moves around the system and uses this as the basis for making decisions based on what can be seen locally. In other words - so long as the system is intelligible in these terms (local-global correlations) one can act on local information and achieve global goals.

With the foregoing in mind, the present invention as defined in claim 8 provides a system for modelling interaction between a plurality of agents and an environment, comprising agent storage means for storing information on the characteristics of each agent, environment storage means for storing detailed information on visible locations within an arbitrary field of view for each location in the complete environment accessible by the agents and processor means for evaluating probabilities of the agents taking certain actions within the environment based on the detailed environment information and the characteristics of the agents, such that the agents have apparently sophisticated capabilities.

By providing detailed information on the environment which is accessible by the agents, each agent can be kept relatively simple yet be given apparently sophisticated capabilities due to the embedded information in the environment. Further, this system and its associated method allows a large number of agents to interact with each other and the environment whilst maintaining a relatively simple and economic agent representation.

Preferably the environment information includes a visibility graph which records for each location in the environment the other locations that are directly visible from it. Further, the environment information may include measures of the visibility graph itself which provide information on the suitability or desirability of selecting a location to move towards, or such conditions as the likelihood of a plurality of agents being in a particular area of the environment. This further information can be viewed by the agents by selecting the location from the visibility graph to assist the agents in moving around the environment.

With the assistance of a visibility graph and the associated information on the location of objects in the environment, the agents are given what amounts to "exosomatic memory" - that is memory that lies outside the agent's own memory store and is instead included in the environment that the agent inhabits.

The graph can also be used to compute and store information on the global configuration of the whole spatial layout of the environment, and so can act as a kind of 'cognitive map' for the agents. Since this information is stored in the environment in the form of a look-up table it can be accessed in common by multiple agents. In addition much can be pre-computed and so this allows greater computational efficiency than current methodologies. Since the agent representation can be kept simple large numbers of agents can be used in the model simultaneously and so emergent effects of large populations such as congestion can be simulated. The simplicity of the agent representations make this system particularly appropriate for the application of a range of evolutionary, genetic and other automated optimisation procedures, both for developing agent rule-sets and for applying those in optimising designs. In all of these ways this form of agent simulation presents a significant advance on current methods.

Preferably the agents are free to move around the environment based on a set of rules defining their characteristics, and a processor monitors and stores details of the movements of the agents. Once the system has been run for some time, a useful output can be produced which indicates where the environment works well, and where it may require adjustment.

The different agents may have different characteristics, thereby representing a cross-section of the population, for example. The different characteristics may relate to age, sex, income, time available for a task, etc. Other characteristics will, of course, be appreciated by those skilled in the relevant art and which are necessary for a particular evaluation of an environment to be undertaken.

Typical environments where a system according to the present invention may be useful are supermarkets, museums, art galleries, airports, railway stations, etc. If the environment is a supermarket, the detailed information may relate to the aisle layout and product locations, for example. Similarly, if the environment relates to a museum, the detailed information may related to the floor plan and location of display articles, for example.

According to a further aspect of the present invention, there is provided a method of modelling interaction between a plurality of agents and an environment, comprising providing agents with simple characteristics, storing detailed information on visible locations for each location in the complete environment and allowing the agents to access from an arbitrary field of view environment information from the stored detailed information on a location by location basis and use the information to progress through the environment, such that the agents with simple characteristics appear sophisticated.

The detailed information will preferably include a visibility graph which records (in bins) for each location in the environment the other locations that are directly visible from it. The agents can then decide, based on simple pre-set rules, whether or not a particular location looks "attractive" to the agent and should be accessed.

The detailed information may also include clustering coefficients based on likelihood of a plurality of agents being in a particular area of the environment or number of routings possible from a particular location. The clustering coefficients in an agent's visual field can be used to determine where to move to - for example a movement decision can be based on moving towards an area of low clustering - which means 'a junction'. Much of this detailed information can be pre-computed or added to the system during modelling of the system. In any event, the detailed information does not need to be associated specifically with each agent, but is readily accessible by each agent on a location by location basis.

As information about current locations of agents may be stored in the visibility graph data structure itself, including tagging the location with a reference number of each agent, all the features described in the Reynolds (1987) reference discussed above are available to an agent in a system according to the present invention. More particularly, for example, an agent can see which direction another agent in the system is heading, or even "see" non-visible attributes of the agents, such as an agent's shopping list, or likes and dislikes. A system according to the present invention thereby allows agents to walk up to agents that can be "seen" to have similar tastes, or to form lanes simply by moving behind an agent walking in the same direction as it, or to avoid oncoming agents, etc. Hence, it should be understood that the present invention may allow agents to see other agents by reference to the data structure bins in its field of view.

In addition to current locations of agents, it is a simple matter to add historical data to the data structure bins. Information about how many agents have visited a particular location is easily stored in a system according to the present invention. Other information, such as the likes or dislikes of agents that have visited a particular location, may also be added. The quick look-up system provided by the present invention therefore allows agents to move towards locations which are popular. The importance of this feature cannot be over emphasised - the exosomatic memory comes into play fully - by recording and using that record, a collective memory of space can be constructed.

The present invention may also allow for significantly more complex measures to be added to the visibility graph bin structure. An example might be optic flow.

The visibility graph may also contain information ordered by distance to location, so that it is easy to work out the farthest visible location in every direction. Apart from obvious applications, such as moving in the direction with furthest line of sight, or to another location with a long line of sight in a particular direction, it may be useful for quick calculation of optic flow. Further, the ordered information may be used to find out such information as "how much space is available to an agent before it encounters a crowd", where a crowd is easily identified by many currently occupied locations in that visibility graph bin.

As another example of potentially useful measures, the detailed information may also include control values (Hillier and Hanson, 1984). This measure indicates the ratio of visual area accessible from the current location to the visual area accessible from the immediately connected visible area, and thus suggests how much the current location 'controls' its surroundings. This measure may be useful in determining key stages on a route from A to B, and thus the main movement channels within a system. If the agent is aware that such a movement channels exists, through seeing it in its immediate visual surroundings, then it may decide to use that channel to access further space.

As will be appreciated, the approach according to the present invention proposed herein allows large numbers of relatively simple agents to share more sophisticated cognitive capacity, since part of that capacity is coded into the environment which they all share. The method of the invention is based on an extension of visibility graph analysis to allow location specific information about what can be seen from each point in an environment to be pre-processed so that as an agent moves through an environment they have direct access to a range of local information. Since the information on what can be seen from each location is coded into the environment itself, and can be pre-processed, relatively simple agents can be developed with apparently complex cognitive and perceptual abilities. There is a wide range of possible applications for a simulation tool such as this. For example in developing agent simulations as predictive modelling tools for help in the design of built environments in which people interact with each other as well as with objects in the environment. Examples include factories, offices, laboratories, art galleries, urban retail neighbourhoods, shopping malls, transport interchanges and shop interiors. In fact the tool would be applicable in any situation where the design of the built environment aims to optimise or regulate the way that people moving through an environment are brought into contact with objects or facilities; including other people, located in that environment.

The present invention is now described, by way of example only, with reference to the accompanying drawings, in which:
Figure 1 is a schematic plan view of a visibility graph analysis of an art gallery;
Figure 2 is a plan view of the same art gallery showing the routes most used by visitors;
Figure 3 is a bin representation of visibility;
Figure 4 is a flow diagram representing agent navigation;
Figures 5 and 6 are examples of object/process diagrams for a visibility graph based agent movement decision model for use in a method or system according to the present invention; and
Figure 7 is a block diagram showing structure in general terms of a system according to the present invention.

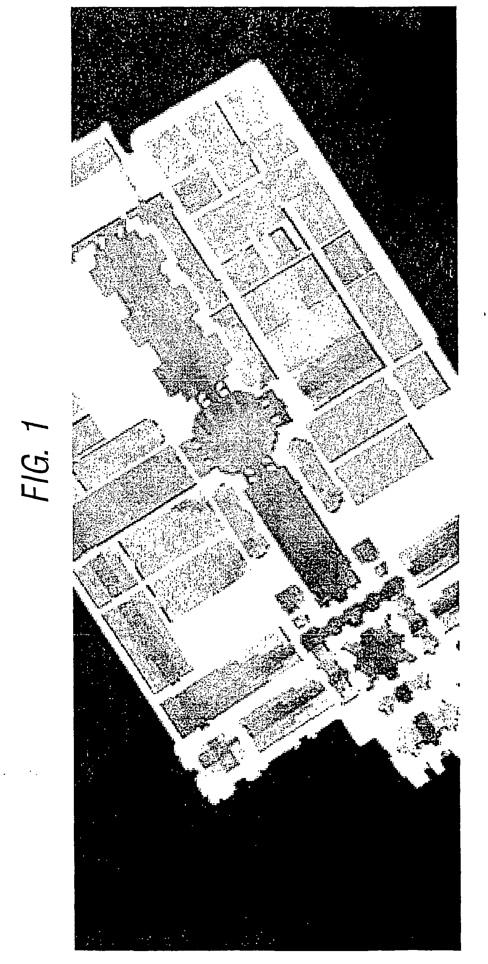

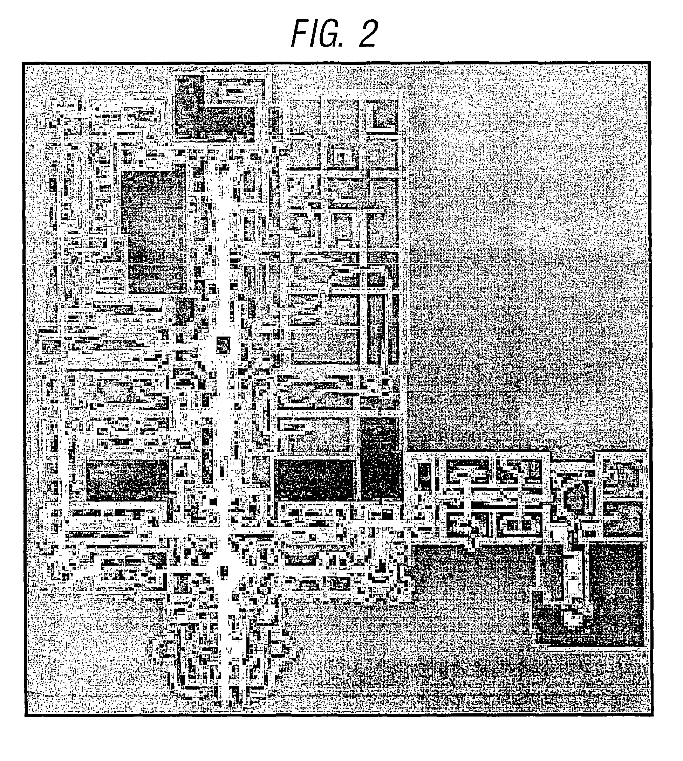

As has been mentioned above, the present invention can be used to develop a tool for helping to design art gallery or museum layouts (for example) and placement of paintings or artefacts for display. In this example, an existing gallery layout would be modelled in a 3d CAD modelling application. Data on the location of artefacts on walls or display units would be surveyed and integrated into the 3d model. Visibility graph analysis (Fig. 1) would then be used to compute the list of artefacts visible from every location in the open circulation space of the gallery and this would then be stored in a look-up table for each location in the open space. Simple agents would then be developed with rules governing movement validated against observations of real visitor movement in the real gallery (Fig 2). Rules on movement and browsing behaviour would be developed to mirror the patterns of behaviour of real visitors as closely as possible. Once agents have been developed and validated as behaving 'realistically' in the model of the existing gallery they would be used to test new layouts or display strategies. It would be possible to automate the process of both developing the agent rules and of optimising new layouts using evolutionary programming or genetic algorithm techniques, or other hybrid learning and optimisation techniques.

A tool developed for optimising retail layouts and placement of products on shelves provides another example. In this an existing store layout would be modelled in a 3d CAD modelling application. Data on the location of products on shelving units would be taken from the stores 'planogram' application and integrated into the 3d model. Visibility graph analysis would then be used to compute the list of products visible from every location in the open circulation space of the store and this would then be stored as a look-up table for each location in the open space. Simple agents would then be developed with rules governing movement validated against observations of real customer movement in the real store. These agents would then be given realistic shopping lists developed using loyalty card, EPOS and self scanned data from the store in question. The profile of shopping lists would be representative of the distribution of basket loads for the real population. Product associations would be used to trigger the memory of the individual shopping list and rules on movement and purchasing behaviour would be developed to mirror the patterns of buying behaviour of real customers as closely as possible. Once agents have been developed and validated as behaving 'realistically' in the model of the existing store they would be used to test new store layouts or product placement strategies either for the same store or a new store. It would be possible to automate the process of both developing the agent rules and of optimising new layouts using evolutionary programming or genetic algorithm techniques, or other hybrid learning and optimisation techniques. The model could also be developed to give measures of other factors - e.g. success with which the shopping list was filled, time taken to fill list, etc. as measures of satisfaction. Further, the agents could have particular characteristics dictated by age, sex, income, time available to shop, etc.

### The exosomatic memory architecture

According to the present invention, there are three components of the agent simulation architecture:
1. Agents have rules governing behaviour based on what they perceive in their environment.
2. Agents are located in an environment composed of open space, building surfaces, objects and other agents. The open space in the environment comprising any space within in which agents are able to move or through which they can see is for example tessellated into a grid of location points (- other techniques might include random sampling of the space) . These points are represented in a look-up table, and each entry in the table is tagged with a list of data describing various properties of that location, and of all the locations and objects that are visible from that location.
3. There is a procedure for pre-computing the static parts of the look-up table based on the visibility graph describing the relations of intervisibility of the location points in the environment. The dynamic parts of the look-up table, such as the location of other agents, cannot be pre-computed and must be computed in real time, although the previous positions of agents may be inserted into the same pixelated table thus easing computation of current agent locations, and keeping them together with other computations performed on the system.

Components 2 and 3 comprise the exosomatic memory architecture for the agent simulation. The idea of pre-computing a look-up table to represent static parts of the environment is not novel and has been proposed by others (see for example http://www.dgp.toronto.edu/people/tu/thesis/node82.html Xiaoyuan Tu PhD thesis). However, the system proposed here is novel in that it uses the visibility graph as the basis for the look-up table, and for computation of global spatial relations in the environment. The key factor here is that by using the visibility graph and by computing graph metrics (including those used in the space syntax approach) of that graph the look-up table encodes not only object locations but also information about the accessibility structure of the environment. This means that in effect the agents are given inferred possibilities of the environment, or at least information on the global spatial relations of different locations visible from a particular point in the environment. This allows rules governing agent movement not only to read local information from the look-up table but also to use that to fulfil global intentions. It is this property that converts the look-up table architecture from a method for representing agent perception to one for representing memory. Perception is entirely local and a look-up table (such as Tu's cited above) that gives information only about what can be seen directly, essentially only replaces perception. However, in this system the visibility graph allows the look-up table to do three things. Firstly, it can store extended local information - for example, the clustering coefficient can tell the agent about spaces with high potential for further movement. Secondly, it can store global information - for example the global mean depth of all locations visible from the agent's point of view. Thirdly, it allows for the entire graph to be traversed, and so for the computation of rational routes to remote locations. However, the inventors' use of the graph also represents a shift in paradigm: the graph is not being used to store the location of things, but to represent the different potential of spaces available to an agent.

### Visibility Graph as a basis for exosomatic memory architecture

A visibility graph is simply a graph (i.e., a set of vertices and a set of edges linking those vertices) of locations of mutual visibility. For example, the set of vertices may be a set of locations laid out on a regular grid of 1 m x 1m cells. In the building floor plan, for every set of points that are mutually visible, an edge is added, connecting those two points. This is not the only implementation though: another method might involve sampling the space and making connections between vertices using a Monte Carlo technique, so the space is sampled at two levels: both spatially and visually.

Note that the visibility graph is not novel and has been referred to in mathematics for at least 40 years (Berge C. 1960 and see Berg et al. 1996 for a more recent review). However, the use of that information and the graph itself as a part of the data structure for an agent simulation is, so far as the inventors can ascertain, entirely novel.

### The Bin Representation of the Agents' Environment

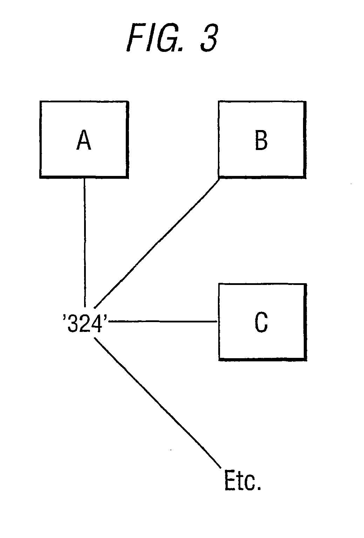

A possible implementation of this architecture would use a 'Bin' representation of the environment. The visibility graph method may be used to allocate point values to locations, and also a technique to retrieve data quickly for the visual cone of an agent. For example, for each location one can store a set of 'bins', containing the visible locations in different directions (see Figure 3 for a location labelled '324').

Each bin simply contains a set of reference numbers, indicating other locations, for example bin A might contain location numbers '151', '152', '251', etc. If the agent concerned was heading 'East' then the current set of visible locations would be those in bin 'C'. Typically many more bins would be stored than shown for any location (the inventors' current implementation has 32), so that, for example, what is visible in the direction 'North-north east' can easily be determined.

As well as a set of bins at each location, a set of attributes is also stored. Some of these attributes are straightforward, e.g., 'this location has a picture hanging in it', 'this location has a sign in it'. Other attributes can be calculated from the visibility graph itself (an easy example might be 'the total viewable space from this location'). All the attributes are stored in the same look-up table, so it is easy for an agent to look 'east' to see that there is, for example, a sign, several pictures and several locations with low amounts of viewable space in that direction.

One attribute of the visibility which appears to be particularly important is the 'clustering coefficient'. The clustering coefficient is a simple measure of a graph, first proposed by Watts and Strogatz (1999) to measure 'Small Worlds'. It is applicable to all graphs, not just visibility graphs. If one defines the 'neighbourhood' of a vertex to be the set of vertices immediately connected by an edge to the current vertex, then the clustering coefficient is the number of edges between all members of the neighbourhood divided by the number of total possible edges that could possibly exist.

The clustering coefficient gives an idea of how much visual information is lost when one moves away from a specific location to any other location, and thus it is a measure of 'junctioness' of a location. The inventors hypothesise that humans are probably well able to recognise junctions (from years of 'training' of what a junction looks like). They also hypothesise that humans will typically search for promising junctions when seeking out new areas of a space. Hence, an agent that searches out junctions is likely to resemble a human moving around a layout. This could be one of the rules defining characteristics of the agents, namely that an agent looks for junctions and is guided by them.

Thus, if the bin for what is currently 'straight ahead' for an agent contains a location '151' and location '151' has a high 'junctioness', the system might continue to move the agent in the current direction since when the agent gets there it would have good access to further information. This eliminates the need for the agent to have a highly developed cognitive map of any area - all the agent has to do is be able to recognise junctions and to have a rough map of say, visited area, for it to behave in a sensible exploratory fashion. In fact, the method the inventors propose obeys Occam's razor (which states that where two competing hypotheses exist as an explanation for a phenomenon, the simplest shall prevail), and provides for a very efficient form of rule that will achieve globally sensible and rational looking movement patterns while employing minimal rule sets.

Of course, the clustering coefficient is just one measure of a visibility graph, and many other metrics may be used to determine junctioness, or any other feature of the visual space which might be considered important. In addition, the 'bin' method is computationally cheap, since the data may be left on the long-term residual memory of the computer (e.g., the hard-disk) for access when required, and needs only be computed once for use by multiple agents.

### Agent Navigation Using the Bin Representation

An example of a simple algorithmic rule relating to undirected movement in open space for an agent is as follows:
1. From the current location, look at the contents of the 'bin' in the current viewing direction. Goto 2.
2. Find the node with lowest clustering coefficient in that 'bin'. Label this node 'A'. Goto 3.
3. Is node 'A' over X metres away? ('are you standing on or near a junction') No - goto 4.; Yes - goto 6.
4. From the current location look at the contents of the 'bin's within Y degrees of the current viewing direction. Goto 5.
5. Find the node with lowest clustering coefficient in these bins over X metres away and label this node 'A'.
6. Move towards node 'A'. -> 1.

### Algorithm notes:

A. Typical values might be: bins include all nodes within a 15 degree angle of the current viewing direction, X is 3 metres and Y is 180 degrees.
B. In a real system, to avoid looping behaviour, "select the node with the lowest clustering coefficient" would perhaps be replaced with "select a node using a probability function based on low clustering coefficient."
C. This algorithm does not generally get stuck against walls, as clustering coefficients against walls are greater than or equal to those away from walls.

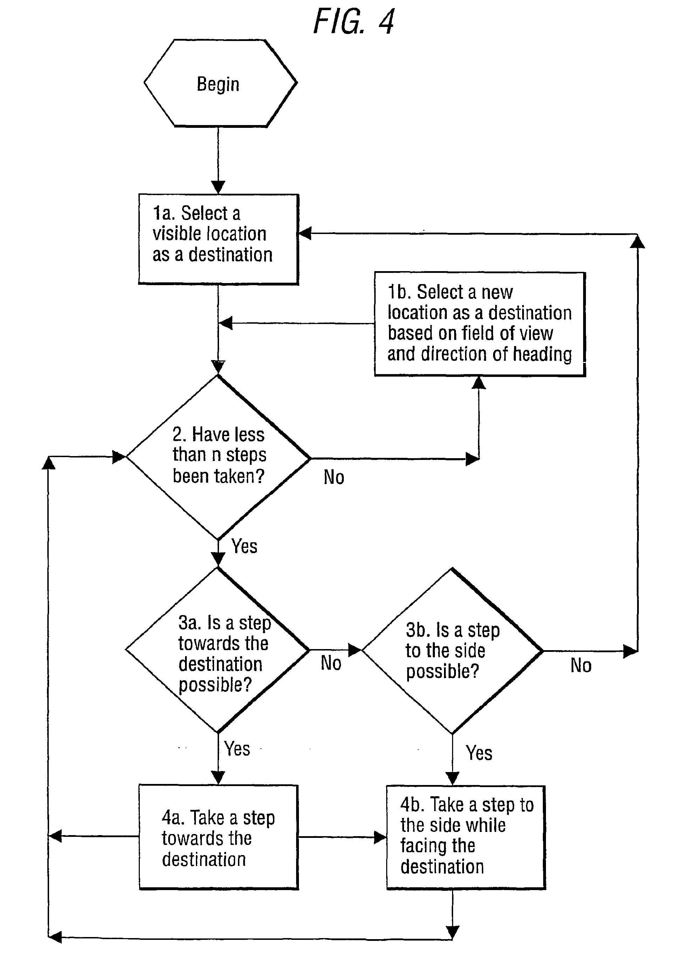

Agent navigation may also be represented by the flow diagram shown in Figure 4, which comprises the following steps:

### Begin

An agent is placed at an *x,y* location in a building or urban layout with an underlying preprepared visibility graph. The location is selected at random or deliberately from a set of predetermined starting locations.

### 1a. Select a visible location as a destination

The agent determines which vertex of the visibility graph corresponds to its *x*,y location. Using the visibility graph the agent selects a currently visible location as a destination at random. If clustering coefficients or other graph measures are being used, the random choice of destination is weighted towards low clustering coefficient (or whatever measure is being used). The destination coordinates *xₜ, yₜ* are stored. The number of steps taken is set to 0.

### 1b. Select a new visible location as a destination based on field of view and direction of heading.

The agent determines which vertex of the visibility graph corresponds to its *x,y* location. The agent uses the current location to destination vector to determine its heading. Using the visibility graph the agent selects a currently visible location as a destination at random, from within +/- m bins of its current heading, when m is a whole number. We have found m set to 7 where there are a total of 32 bins is a useful setting. This approximates to a field of view of 170 degrees. For example, if the current direction is in the same direction as bin 10, a visible location is chosen at random from bins 3 to 17. As with 1a., if clustering coefficients or other graph measures are being used, the random choice of destination is weighted towards low clustering coefficient. The new destination coordinates *xₜ, yₜ* are stored. The number of steps taken is set to 0.

### 2. Have less than n steps been taken?

The agent refers to how many steps it has taken towards the destination. If the agent has taken n or more steps, where n is a whole number, or it has arrived at the current destination *xₜ, yₜ,* it goes to rule 1 b, otherwise it goes to rule 3a.

### 3a. Is a step towards the destination possible?

The agent tests to see if it is possible to move in the direction of the destination by the step size (a certain amount, typically the size of a visibility graph grid square), without hitting another object, e.g. a wall or another agent. If it can make a step it goes to rule 4a, otherwise it goes to rule 3b.

### 3b. Is a step towards the side possible?

The agent tests to see if it possible to move in a direction orthogonal to that of the destination by the step size (a certain amount, typically the size of a visibility graph grid square), without hitting another object, e.g. a wall or another agent. If it can make a step it goes to rule 4b, otherwise it returns to rule 1 a.

### 4a. Take a step towards the destination.

The agent takes a step in the direction of the destination, adjusting its current *x,y* location. The number of steps taken is incremented by one.

### 4b. Take a side step facing the destination.

The agent takes a step in the direction orthogonal to that of the destination by the step size, adjusting its current *x,y* location. The number of steps taken is incremented by one.

### Possible implementation of an exosomatic memory architecture

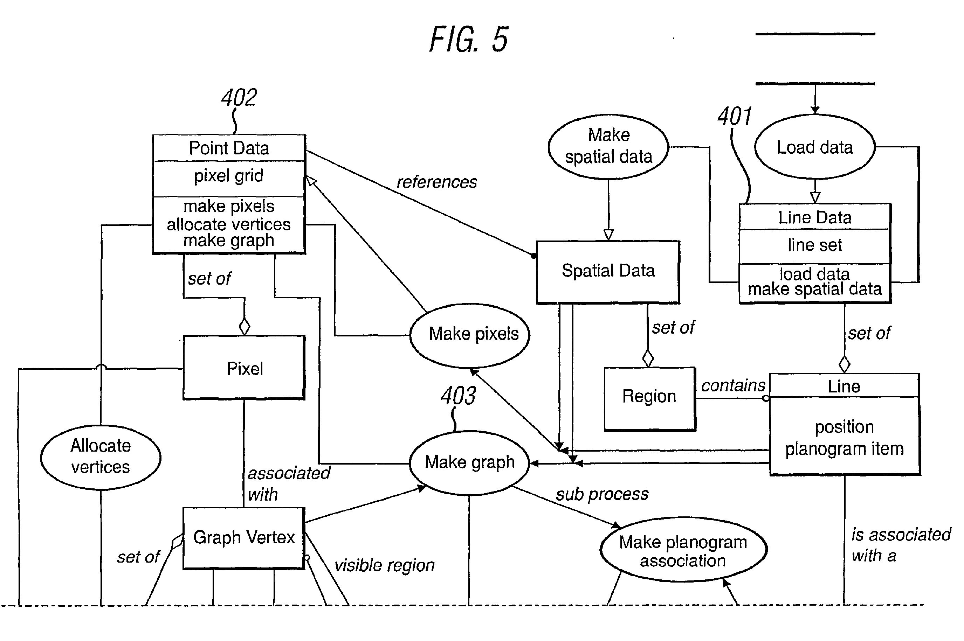

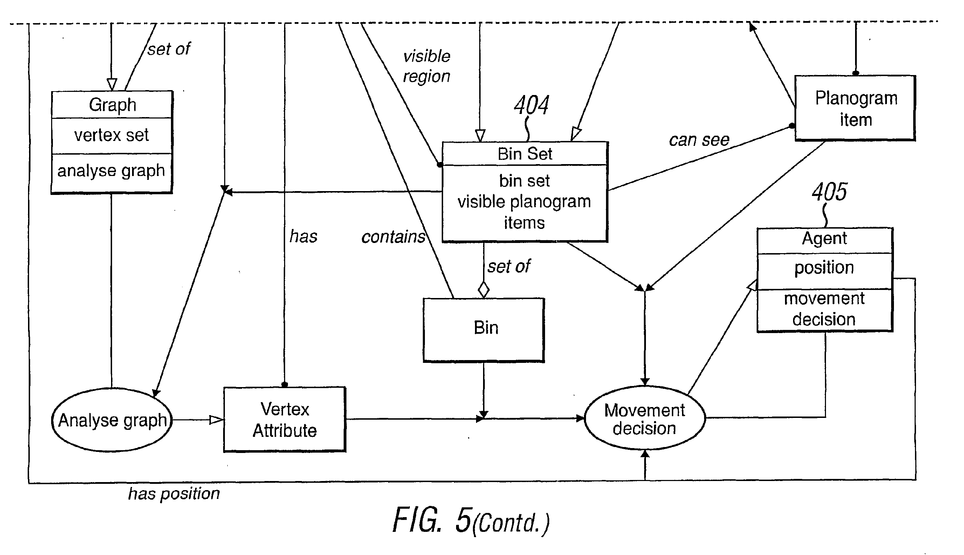

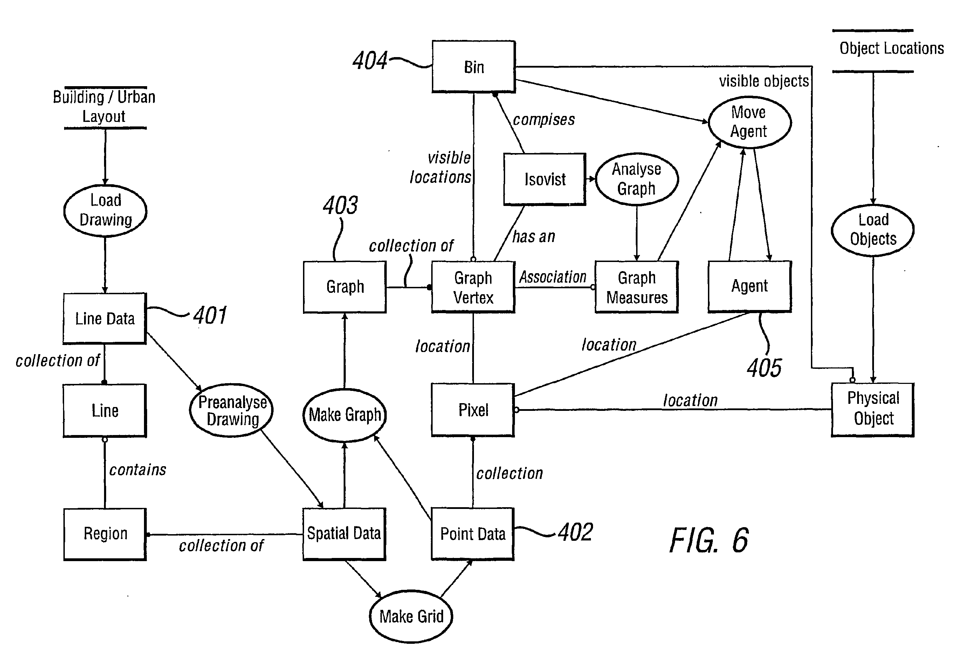

Figures 5 and 6 show examples of object/process diagrams for visibility graph based agent movement decision models for use in methods or systems according to the present invention. With reference to the figures, line data (401) relating to a layout of a supermarket or other public space is loaded and processed to produce a plan of the public space. Point data (402) comprising a pixel grid and vertices between pixels is prepared based on the public space plan, and this data is analysed to produce a visibility graph (403). Bin sets (404) are then produced based on the public space plan, visibility graph (403) and other information, thereby enabling a lookup table to be produced. An agent (405) applied to the public space can assess its position with reference to the lookup table and can make movement decisions based on information available via the lookup tables, visibility graph and other built in criteria. Movement around a public space can thereby be replicated in an intelligent model to assist in future planning and design of public spaces.

### Layout improvement using the intelligent modelling system

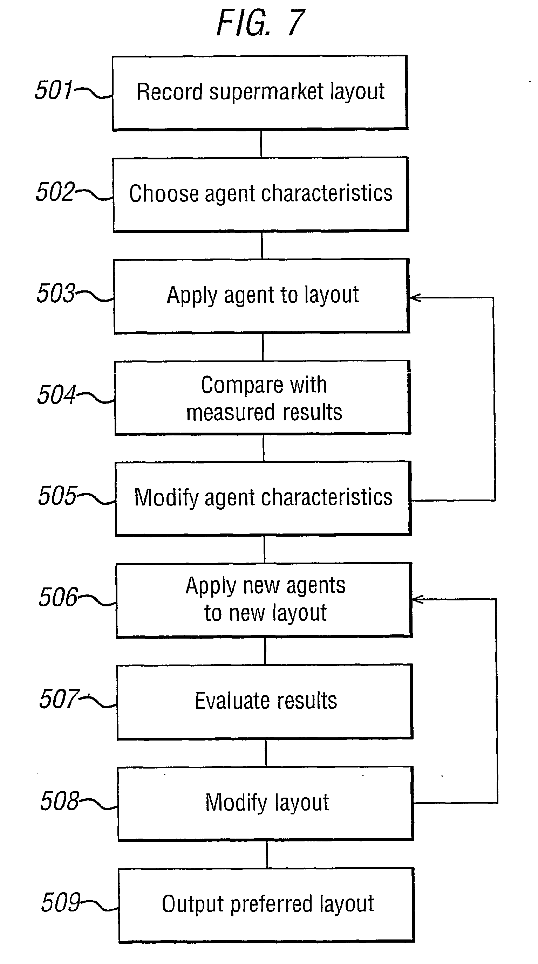

Turning now to Figure 7 which shows a flow diagram of the steps taken when applying a method according to the present invention. As can be seen in Figure 5, in step 501 a known supermarket layout is recorded. In step 502 agents' characteristics are selected based on rules applicable in the supermarket. In step 503, the agents are applied to the recorded supermarket layout and in step 504 the results of step 503 are compared with actual measured results. In step 505, the agent characteristics are modified as necessary and steps 503, 504 and 505 are repeated until the agent characteristics are satisfactory. In step 506, the agents with their new characteristics are applied to a new supermarket layout, where goods may have been moved around supermarket shelves or the actual aisle layout of the supermarket may have been changed and, in step 507, the results are evaluated. The supermarket layout can again be modified in step 508 and steps 506, 507 and 508 can be repeated until a preferred supermarket layout has been found. The preferred layout can then be provided as an output in step 509.

By following the above method and applying agents having simple characteristics to a supermarket layout in which detailed information on the layout has been stored for access by the agents, a markedly improved result can be achieved.

It will of course be understood that the present invention has been described above purely by way of example, and that modifications of detail can be made within the scope of the invention.

### APPENDIX A

### REFERENCES

Bachelder, I A and Waxman, A M, Mobile robot visual mapping and localisation: a view-based neurocomputational architecture that emulates hippocampal place learning. Neural Networks 7(6/7), 1994, 1083-1099
Beckman, R J, The Transportation Analysis Simulation System (TRANSIMS) The Dallas-Ft. Worth Case Study, Los Alamos Unclassified Report LAUR-97-4502LANL, Los Alamos National Laboratory. Available online at http://www-transims.tsasa.lanl.gov
Berg *et al* (1996) Computational Geometry (Springer, Berlin) - there is an entire chapter (Ch 15) entitled Visibility Graphs: Finding the Shortest Route.
Claude Berge (1960) Theory of Graphs.
Fischer, K., Muller, J., Pischel, M., A Pragmatic BDI Architecture, in: Readings in Agents, Morgan Kaufmann, 1998
Galea, E R and Galparsoro, J M P, A computer-based simulation model for the prediction of evacuation from mass-transport vehicles. Fire Safety Journal 22, 1994, 341-366.
Hillier, B. and Hanson, J., (1984) The Social Logic of Space, Cambridge University Press, Cambridge, UK.
Kerridge, J and McNair, N, PEDFLOW - A system for modelling pedestrian movement using occam. In Architectures, Languages and Techniques for Concurrent Systems, BM Cook (ed), IOS Press Amsterdam, 1999, 1-17
Resnick, M, Turtles, Termites and Traffic Jams, MIT Press, 1994.
Reynolds, C W, Flocks, herds and schools: a distributed behavioural model. Computer Graphics 21 (4), 1987.
Watts and Strogatz 'Small Worlds', Nature 371, 1999

## Claims

1. A method of modelling interaction between a plurality of software agents and an environment, comprising:
providing/agents with characteristics,
storing information on visible locations for each location in the environment and
allowing the agents to access from an arbitrary field of view environment information from the stored information on a location by location basis and use the information to progress through the environment, such that the agents appear sophisticated.

2. A method as claimed in claim 1, wherein the environment information includes a visibility graph which records for each location in the environment the other locations that are directly visible from it.

3. A method as claimed in claim 2, wherein the environment information includes measures of the environment or graph which are stored in a data structure associated with the environment indicating the attractiveness of a space as a location which may present further possibilities of movement through the environment.

4. A method as claimed in any preceding claim, wherein the environment information includes information on the number of junctions attributed to particular locations.

5. A method as claimed in any preceding claim, wherein the environment information includes clustering coefficients.

6. A method as claimed in claim 5, wherein the clustering coefficients are used to calculate the potential of a particular area as being attractive to an agent.

7. A method as claimed in claim 5, wherein the clustering coefficients provide an indication of the number of routings possible from a particular location.

8. A system for modelling interaction between a plurality of software agents and an environment, comprising
agent storage means for storing information on the characteristics of each agent,
environment storage means for storing environment information on visible locations within an arbitrary field of view for each location in the environment accessible by the agents and
processor means for evaluating probabilities of the agents taking certain actions within the environment based on the environment information and the characteristics of the agents, such that the agents have apparently sophisticated capabilities.

9. A system as claimed in claim 8, wherein the environment information includes a visibility graph which records for each location in the environment the other locations that are directly visible from it.

10. A system as claimed in claim 9, where the visibility graph provides analysis of both local and global relationships between spaces within an environment in a form which is made easily accessible to a plurality of agents.

11. A system as claimed in claim 10, where the agents can form a plan of action which allows them to behave in a manner which might be described as 'intelligent' or 'human-like' by an observer of the agents.

12. A system as claimed in claim 11, where the plan of action may be based on a succession of global values found at locations within the visibility graph, which thus makes the plan of action (although based solely on values found within the current visual set) appear to an observer of the agents as a global plan of action or an 'intentional' plan of action.

13. A system as claimed in any one of claims 8 to 12, wherein the environment information includes clustering coefficients.

14. A system as claimed in claim 13, wherein the clustering coefficients define the number of routings available from a particular location.

15. A system as claimed in any one of claims 8 to 14, wherein the agents are free to move around the environment based on a set of rules defining their characteristics.

16. A system as claimed in any one of claims 8 to 15, wherein the processor means monitors and stores details and movements of the agents.

17. A system as claimed in any one of claims 8 to 16, wherein different agents have different characteristics.

18. A system according to claim 17, wherein the different characteristics relate to age, sex, income, time available or the like.

19. A system as claimed in any one of claims 8 to 18, wherein the environment information is stored in the form of look-up tables which are accessible by multiple agents at any location.

20. A system according to any one of claims 8 to 19 wherein the environment is a shop, store, supermarket, shopping mall or the like.

21. A system as claimed in claim 20, wherein the environment information relates to aisle layout and/or product locations.

22. A system as claimed in any one of claims 8 to 19, wherein the environment is a museum, art gallery, airport, hospital, school, office or the like.

23. A system as claimed in claim 22, wherein the environment information relates to the floor plan and/or article locations.

24. A system according to any one of claims 8 to 23 wherein evolutionary algorithms or other optimisation techniques are also used to improve agent performance for particular desired outcomes.

25. A method according to any one of claims 1 to 7 wherein the environment is a shop, store, supermarket, shopping mall or the like.

26. A method as claimed in claim 25, wherein the environment information relates to aisle layout and/or product locations.

27. A method as claimed in any one of claims 1 to 7, wherein the environment is a museum, art gallery, airport, hospital, school, office or the like.

28. A method as claimed in claim 27, wherein the environment information relates to the floor plan and/or article locations.

29. A method according to any one of claims 1 to 7 and 25 to 28, wherein evolutionary algorithms or other optimisation techniques are also used to improve agent performance for particular desired outcomes.

30. A computer readable medium having thereon computer program means comprising code means which when run on a data processing system performs all the steps of the method of any of claims 1 to 7.

## Patentansprüche

1. Verfahren zum Modellieren einer Interaktion zwischen einer Mehrzahl von Software-Agenten und einer Umgebung, umfassend:
ein Bereitstellen von Agenten mit Eigenschaften,
ein Speichern von Information über sichtbare Orte für jeden Ort in der Umgebung und
ein Befähigen bzw. Erlauben der Agenten, von einem beliebigen Sichtfeld aus auf Umgebungsinformation aus der gespeicherten Information auf einer Ort-für-Ort-Grundlage zuzugreifen und die Information zu verwenden, um sich derart durch die Umgebung fortzubewegen, dass die Agenten hochentwickelt erscheinen.

2. Verfahren nach Anspruch 1, wobei die Umgebungsinformation einen Sichtbarkeitsgraph beinhaltet, der für jeden Ort in der Umgebung die anderen Orte aufzeichnet, die von ihm aus direkt sichtbar sind.

3. Verfahren nach Anspruch 2, wobei die Umgebungsinformation Maße der Umgebung oder des Graphen beinhaltet, die in einer Datenstruktur gespeichert sind, die mit der Umgebung in Zusammenhang steht, wodurch die Attraktivität eines Raumes als Ort angegeben wird, der weitere Möglichkeiten der Bewegung durch die Umgebung bieten kann.

4. Verfahren nach einem der vorhergehenden Ansprüche, wobei die Umgebungsinformation Information über die Anzahl von Anschlussstellen beinhaltet, die bestimmten Orten zu eigen sind.

5. Verfahren nach einem der vorhergehenden Ansprüche, wobei die Umgebungsinformation Ansammlungskoeffizienten beinhaltet.

6. Verfahren nach Anspruch 5, wobei die Ansammlungskoeffizienten zur Berechnung des Potenzials eines bestimmten Bereiches als für einen Agenten attraktiver Bereich verwendet werden.

7. Verfahren nach Anspruch 5, wobei die Ansammlungskoeffizienten eine Angabe der Anzahl von Streckenführungen bereitstellen, die von einem bestimmten Ort aus möglich sind,

8. System zum Modellieren einer Interaktion zwischen einer Mehrzahl von Software-Agenten und einer Umgebung, umfassend:
Agentenspeichermittel zum Speichern von Information über die Eigenschaften jedes Agenten,
Umgebungsspeichermittel zum Speichern von Umgebungsinformation über sichtbare Orte innerhalb eines beliebigen Sichtfeldes für jeden Ort in der Umgebung, der für die Agenten zugänglich ist und
Prozessormittel zum Bewerten von Wahrscheinlichkeiten dahingehend, dass die Agenten bestimmte Handlungen innerhalb der Umgebung auf Grundlage der Umgebungsumgebungsinformation und der Eigenschaften der Agenten derart vornehmen, dass die Agenten augenscheinlich hochentwickelte Fähigkeiten aufweisen.

9. System nach Anspruch 8, wobei die Umgebungsinformation einen Sichtbarkeitsgraph umfasst, der für jeden Ort in der Umgebung die anderen Orte aufzeichnet, die von ihm aus direkt sichtbar sind.

10. System nach Anspruch 9, bei dem der Sichtbarkeitsgraph eine Analyse sowohl der lokalen wie auch der globalen Beziehungen zwischen Räumen innerhalb einer Umgebung in einer Form bereitstellt, welche einfach zugänglich gemacht wird für eine Mehrzahl von Agenten.

11. System nach Anspruch 10, bei dem die Agenten einen Handlungsplan entwerfen können, der sie befähigt bzw. es ihnen erlaubt, sich auf eine Weise zu verhalten, die von einem Beobachter der Agenten als "intelligent" oder "menschlich" beschrieben werden könnte.

12. System nach Anspruch 11, bei dem der Handlungsplan auf einer Abfolge globaler Werte basieren kann, die an Orten innerhalb des Sichtbarkeitsgraphen vorgefunden bzw. gefunden werden, wodurch bewirkt wird, dass der Handlungsplan (obwohl er nur auf Werten basiert, die innerhalb des aktuellen visuellen Satzes vorgefunden werden) einem Beobachter der Agenten als globaler Handlungsplan oder "beabsichtigter" Handlungsplan erscheint.

13. System nach einem der Ansprüche 8 bis 12, wobei die Umgebungsinformation Ansammlungskoeffizienten umfasst.

14. System nach Anspruch 13, wobei die Ansammlungskoeffizienten die Anzahl von Streckenführungen festlegen, die von einem bestimmten Ort aus verfügbar sind.

15. System nach einem der Ansprüche 8 bis 14, wobei sich die Agenten auf Grundlage eines Satzes von Regeln, der ihre Eigenschaften festlegt, frei durch die Umgebung bewegen können.

16. System nach einem der Ansprüche 8 bis 15, wobei die Prozessormittel Einzelheiten und Bewegungen der Agenten überwachen und speichern.

17. System nach einem der Ansprüche 8 bis 16, wobei verschiedene Agenten verschiedene Eigenschaften aufweisen.

18. System nach Anspruch 17, wobei die verschiedenen Eigenschaften Alter, Geschlecht, Einkommen, verfügbare Zeit oder dergleichen betreffen.

19. System nach einem der Ansprüche 8 bis 18, wobei die Umgebungsinformation in Form von Nachschlagetabellen gespeichert ist, auf die mehrere Agenten an einem beliebigen Ort zugreifen können.

20. System nach einem der Ansprüche 8 bis 19, wobei die Umgebung ein Laden, ein Geschäft, ein Supermarkt, ein Einkaufszentrum oder dergleichen ist.

21. System nach Anspruch 20, wobei die Umgebungsinformation die Gang- bzw. Reihenanordnung und/oder Produktorte betrifft.

22. System nach einem der Ansprüche 8 bis 19, wobei die Umgebung ein Museum, eine Kunstgalerie, ein Flughafen, ein Krankenhaus, eine Schule, ein Büro oder dergleichen ist.

23. System nach Anspruch 22, wobei die Umgebungsinformation den Stockwerksgrundriss und/oder Artikelorte betrifft.

24. System nach einem der Ansprüche 8 bis 23, wobei Evolutionsalgorithmen oder andere Optimierungstechniken ebenfalls verwendet werden, um das Leistungsvermögen der Agenten mit Blick auf bestimmte gewünschte Ergebnisse zu verbessern,

25. Verfahren nach einem der Ansprüche 1 bis 7, wobei die Umgebung ein Laden, ein Geschäft, ein Supermarkt, ein Einkaufszentrum oder dergleichen ist.

26. Verfahren nach Anspruch 25, wobei die Umgebungsinformation die Gang- bzw. Reihenanordnung und/oder Produktorte betrifft.

27. Verfahren nach einem der Ansprüche 1 bis 7, wobei die Umgebung ein Museum, eine Kunstgalerie, ein Flughafen, ein Krankenhaus, eine Schule, ein Büro oder dergleichen ist.

28. Verfahren nach Anspruch 27, wobei die Umgebungsinformation den Stockwerksgrundriss und/oder Artikelorte betrifft.

29. Verfahren nach einem der Ansprüche 1 bis 7 und 25 bis 28, wobei Evolutionsalgorithmen oder andere Optimierungstechniken ebenfalls verwendet werden, um das Leistungsvermögen der Agenten mit Blick auf bestimmte gewünschte Ergebnisse zu verbessern.

30. Computerlesbares Medium mit einem darauf befindlichen Computerprogrammmittel, das Codemittel umfasst, die, wenn sie auf einem Datenverarbeitungssystem laufen, sämtliche Schritte des Verfahrens nach einem der Ansprüche 1 bis 7 ausführen.

## Revendications

1. Procédé de modélisation de l'interaction entre une pluralité d'agents de logiciel et un environnement, comprenant :
prévoir des agents avec des caractéristiques,
mémoriser l'information sur des emplacements visibles pour chaque emplacement dans l'environnement, et
permettre aux agents d'accéder depuis un champ arbitraire de vision de l'information d'environnement à partir de l'information mémorisée sur un emplacement par une base d'emplacement et d'utiliser l'information pour progresser au travers de l'environnement de sorte que les agents apparaissent sophistiqués.

2. Procédé selon la revendication 1, dans lequel l'information d'environnement comprend un graphe de visibilité qui enregistre pour chaque emplacement dans l'environnement les autres emplacements qui sont directement visibles à partir de celui-ci.

3. Procédé selon la revendication 2, dans lequel l'information d'environnement comprend des mesures de l'environnement ou graphe qui sont mémorisées dans une structure de données associée à l'environnement indiquant l'attraction d'un espace comme un emplacement qui peut présenter d'autres possibilités de mouvement au travers de l'environnement.

4. Procédé selon l'une quelconque des revendications précédentes, dans lequel l'information d'environnement comprend l'information sur le nombre de jonctions attribuées aux emplacements particuliers.

5. Procédé selon l'une quelconque des revendications précédentes, dans lequel l'information d'environnement comprend des coefficients de groupement.

6. Procédé selon la revendication 5, dans lequel les coefficients de groupement sont utilisés pour calculer le potentiel d'une étendue particulière attractive à un agent.

7. Procédé selon la revendication 5, dans lequel les coefficients de groupement fournissent une indication des nombres de routages possibles à partir d'un emplacement particulier.

8. Système pour la modélisation de l'interaction entre une pluralité d'agents de logiciel et un environnement, comprenant :
un moyen de mémorisation d'agent pour mémoriser l'information sur les caractéristiques de chaque agent,
un moyen de mémorisation d'environnement pour mémoriser l'information d'environnement sur des emplacements visibles dans un champ arbitraire de vision pour chaque emplacement dans l'environnement accessible par les agents, et
un moyen processeur pour évaluer les probabilités des agents participant à certaines actions dans l' environnement sur la base de l'information d'environnement et des caractéristiques des agents de sorte que les agents ont apparemment des aptitudes sophistiquées.

9. Système selon la revendication 8, dans lequel l'information d'environnement comprend un graphe de visibilité qui enregistre pour chaque emplacement dans l'environnement les autres emplacements qui sont directement visibles à partir de celui-ci.

10. Système selon la revendication 9, dans lequel le graphe de visibilité fournit l'analyse à la fois des relations locales et globales entre des espaces dans un environnement sous une forme qui est rendue facilement accessible à une pluralité d'agents.

11. Système selon la revendication 10, dans lequel les agents peuvent former un plan d'action qui leur permet de se comporter d'une façon qui peut être décrite comme "intelligente" ou "analogue à l'humain" par un observateur des agents.

12. Système selon la revendication 11, dans lequel le plan d'action peut être basé sur une succession de valeurs globales rencontrées dans des emplacements dans le graphe de visibilité, qui rend ainsi que le plan d'action (bien que basé uniquement sur des valeurs rencontrées dans le jeu visuel courant) apparaisse à un observateur des agents comme un plan global d'action ou un plan "intentionnel" d'action.

13. Système selon l'une quelconque des revendications 8 à 12, dans lequel l'information d'environnement comprend des coefficients de groupement.

14. Système selon la revendication 13, dans lequel les coefficients de groupement définissent le nombre de routages disponibles à partir d'un emplacement particulier.

15. Système selon l'une quelconque des revendications 8 à 14, dans lequel les agents sont libres de se déplacer autour de l'environnement sur la base d'un jeu de règles définissant leurs caractéristiques.

16. Système selon l'une quelconque des revendications 8 à 15, dans lequel le moyen processeur contrôle et mémorise des détails et des mouvements des agents.

17. Système selon l'une quelconque des revendications 8 à 16, dans lequel différents agents ont différentes caractéristiques.

18. Système selon la revendication 17, dans lequel les caractéristiques différentes se rapportent à l'âge, au sexe, au revenu, au temps disponible ou analogue.

19. Système selon l'une quelconque des revendications 8 à 18, dans lequel l'information d'environnement est mémorisée sous la forme de tables de référence qui sont accessibles par de multiples agents en n'importe quel emplacement.

20. Système selon l'une quelconque des revendications 8 à 19, dans lequel l'environnement est une boutique, un magasin, un supermarché, une galerie d'achats ou analogue.

21. Système selon la revendication 20, dans lequel l'information d'environnement se rapporte à l'agencement d'allée et/ou aux emplacements des produits.

22. Système selon l'une quelconque des revendications 8 à 19, dans lequel l'environnement est un musée, une galerie d'art, un aéroport, un hôpital, une école, un bureau ou analogue.

23. Système selon la revendication 22, dans lequel l'information d'environnement se rapporte à un plan de sol et/ou aux emplacements d'articles.

24. Système selon l'une quelconque des revendications 8 à 23, dans lequel des algorithmes évolutifs ou d'autres techniques d'optimisation sont également utilisés pour améliorer la performance d'agent pour des résultats désirés particuliers.

25. Procédé selon l'une quelconque des revendications 1 à 7, dans lequel l'environnement est une boutique, un magasin, un supermarché, une galerie d'achats ou analogue.

26. Procédé selon la revendication 25, dans lequel l'information d'environnement se rapporte à l'agencement d'allée et/ou aux emplacements des produits.

27. Procédé selon l'une quelconque des revendications 1 à 7, dans lequel l'environnement est un musée, une galerie d'art, un aéroport, un hôpital, une école, un bureau ou analogue.

28. Procédé selon la revendication 27, dans lequel l'information d'environnement se rapporte à un plan de sol et/ou aux emplacements d'articles.

29. Procédé selon l'une quelconque des revendications 1 à 7 et 25 à 28, dans lequel des algorithmes évolutifs ou d'autres techniques d'optimisation sont également utilisés pour améliorer la performance d'agent pour des résultats désirés particuliers.

30. Milieu apte à être lu par ordinateur renfermant un moyen de programme d'ordinateur comprenant des moyens de code qui, lorsqu'ils sont mis en oeuvre dans un système de traitement de données réalise toutes les étapes du procédé selon l'une quelconque des revendications 1 à 7.
